(19) **Europäisches Patentamt**
**European Patent Office**
**Office européen des brevets**

(11) **EP 4 242 542 A1**

(12) **EUROPEAN PATENT APPLICATION**
published in accordance with Art. 153(4) EPC

(43) Date of publication:
**13.09.2023 Bulletin 2023/37**

(21) Application number: **22790703.7**

(22) Date of filing: **24.02.2022**

(51) International Patent Classification (IPC):
**F24F 11/86** (2018.01)      **F24F 11/64** (2018.01)
**F24F 11/61** (2018.01)      **F24F 140/20** (2018.01)
**F24F 110/10** (2018.01)

(52) Cooperative Patent Classification (CPC):
Y02B 30/70

(86) International application number:
**PCT/CN2022/077570**

(87) International publication number:
**WO 2022/222593 (27.10.2022 Gazette 2022/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.04.2021 CN 202110436958**

(71) Applicants:
• **Qingdao Haier Air Conditioner General Corp., Ltd.**
  **Qingdao, Shandong 266101 (CN)**
• **Qingdao Haier Air-Conditioning Electronic Co., Ltd**
  **Qingdao, Shandong 266101 (CN)**
• **Haier Smart Home Co., Ltd.**
  **Qingdao, Shandong 266101 (CN)**

(72) Inventors:
• **ZHANG, Lilong**
  **Qingdao, Shandong 266101 (CN)**
• **LI, Jingsheng**
  **Qingdao, Shandong 266101 (CN)**
• **YUAN, Jipeng**
  **Qingdao, Shandong 266101 (CN)**
• **WANG, Wanli**
  **Qingdao, Shandong 266101 (CN)**
• **LIAN, Jianchun**
  **Qingdao, Shandong 266101 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **METHOD AND APPARATUS FOR CONTROLLING AIR CONDITIONER COMPRESSOR, AND AIR CONDITIONER**

(57) Provided is a method for controlling an air conditioner compressor. The method comprises: acquiring a first corrected temperature according to the amplitude decrease correction of a first actual temperature of an inner coil; when the first corrected temperature is less than a first preset temperature, controlling a compressor to run in a frequency increase manner at a first frequency increase rate; determining a limit frequency, which corresponds to the current indoor environment temperature, of the compressor; and when the first corrected temperature is less than the first preset temperature and the current running frequency of the compressor reaches the limit frequency, controlling the compressor to run in a fixed frequency manner at the limit frequency. Further provided are an apparatus for controlling an air conditioner compressor, and an air conditioner. The problem of an excessively high frequency of a compressor caused by the lagging of a change in temperature of an inner coil is solved, the stability of the compressor is improved, and the air output temperature fluctuation of an air conditioner is avoided, thereby improving the user experience.

EP 4 242 542 A1

| | |
|---|---|
| obtaining a first actual temperature of the inner coil and a current indoor ambient temperature | S110 |

↓

| | |
|---|---|
| according to the first actual temperature and a predetermined decreasing amplitude correction value, obtaining a first correction temperature | S120 |

↓

| | |
|---|---|
| in a case where the first correction temperature is lower than a first predetermined temperature, controlling the compressor to operate at a first frequency increasing rate | S130 |

↓

| | |
|---|---|
| obtaining a highest operating frequency of the compressor corresponding to the current indoor ambient temperature, and a current first correction coefficient corresponding to the current indoor ambient temperature, and determining a limiting frequency of the compressor corresponding to the current indoor ambient temperature according to a product of the highest operating frequency and the current first correction coefficient | S140 |

↓

| | |
|---|---|
| obtaining a first current operating frequency of the compressor | S150 |

↓

| | |
|---|---|
| in a case where the first correction temperature is lower than the first predetermined temperature, and the first current operating frequency reaches the limiting frequency, controlling the compressor to operate at the limiting frequency until the first correction temperature is greater than a lower limiting temperature of a decreasing frequency temperature range | S160 |

FIG. 1

**Description**

CROSS REFERENCE OF RELATED APPLICATION

This application claims priority to Chinese Patent Application No. CN202110436958.5, filed on April 22, 2021, the contents of which is incorporated herein by reference in its entirety.

FIELD OF THE INVENTION

The present disclosure relates to the intelligent air conditioner, for example, relates to a controlling method and a controlling device for a compressor of an air conditioner and an air conditioner.

BACKGROUND OF THE INVENTION

At present, in the heating operation of air conditioners, for example, normal heating mode, high-temperature self-cleaning mode, defrosting to heating operation mode, etc., it is necessary to increase the compressor frequency to raise the outlet air temperature to the target temperature, for example, 56°C or higher in high-temperature self-cleaning mode. At present, the increasing frequency control of the compressor generally includes an increasing frequency operation stage, a constant frequency operation stage, and a decreasing frequency operation stage to ensure that the compressor frequency is matched with the load of the refrigeration cycle system.

In actual operation, since the temperature change of the coil lags behind the frequency change of the compressor, for example, the increased temperature of the coil lags behind the increased frequency of the compressor. Therefore, the frequency adjustment of the compressor is not synchronized with the temperature change of the coil.

In the practice of the embodiment of the present disclosure, it is found that at least the following problems of the related technology: in the increasing frequency operation stage of controlling compressor, the increased temperature of the coil lags behind the increased frequency of the compressor, which easily leads to the compressor frequency being too high and not matched with the load of the system, resulting in a shutdown.

SUMMARY OF THE INVENTION

In order to have a basic understanding of some aspects of the disclosed embodiments a brief summary is given below. The summary is not intended to be a general comment or to identify crucial/essential constituent elements or to describe the protection scope of these embodiments but rather to serve as a preface to the detailed description that follows.

The embodiment of the present disclosure provides a controlling method and a controlling device for a compressor of an air conditioner and an air conditioner, in order to solve problems that: in the increasing frequency operation stage of controlling compressor, the increased temperature of the coil lags behind the increased frequency of the compressor, which easily leads to the compressor frequency being too high and not matched with the load of the system, resulting in a shutdown.

In some embodiments, the controlling method for a compressor of an air conditioner includes:

obtaining a first actual temperature of the inner coil and a current indoor ambient temperature; according to the first actual temperature and a predetermined decreasing amplitude correction value, obtaining a first correction temperature; in a case where the first correction temperature is lower than a first predetermined temperature, controlling the compressor to operate at a first frequency increasing rate; obtaining a highest operating frequency of the compressor corresponding to the current indoor ambient temperature, and a current first correction coefficient corresponding to the current indoor ambient temperature, and determining a limiting frequency of the compressor corresponding to the current indoor ambient temperature according to a product of the highest operating frequency and the current first correction coefficient; obtaining a first current operating frequency of the compressor; in a case where the first correction temperature is lower than the first predetermined temperature, and the first current operating frequency reaches the limiting frequency, controlling the compressor to operate at the limiting frequency as constant frequency, until the first correction temperature is greater than a lower limiting temperature of a decreasing frequency temperature range.

In some embodiments, the controlling device includes a processor and a memory storing program instructions, wherein the processor is configured to execute the mentioned controlling method for a compressor of an air conditioner in a case where executing the program instructions.

In some embodiments, the air conditioner includes the mentioned controlling device for a compressor of an air conditioner.

The controlling method and the controlling device for the compressor of the air conditioner, and the air conditioner provided by the embodiment of the disclosure can have the following technical advantages:

In the embodiment of the present disclosure, it is found that under different indoor ambient temperatures, the temperature increasing rate of the inner coil is different, and thus the highest operating frequency in the increasing frequency operation stage of the compressor is different. And under different indoor ambient temperatures, the achievable highest operating frequency of the compressor also varies. Therefore, the highest operating frequency of the compressor is corrected by considering the indoor ambient temperature, and the corrected highest operating frequency is taken as the limiting frequency, and the limiting frequency is taken as operating frequency in the constant frequency operation stage, which effectively solves the problem of excessive compressor frequency caused by the hysteresis of the temperature change of the inner coil. And while the frequency of the constant frequency operation is forcedly controlled to reduce, the actual temperature of inner coil can be corrected by decreasing amplitude, and the corrected temperature is taken as the temperature parameter to control the operation of the compressor, which can avoid the compressor from frequently entering the frequency cycle of increasing-constant-decreasing, improve the stability of the compressor, avoid the fluctuation of the air outlet temperature of the air conditioner caused by the frequent fluctuation of the compressor frequency, ensure the stability of ambient temperature and improve the user experience.

The above general description and the description below are exemplary and explanatory only and are not intended to limit the present disclosure.

BRIEF DESCRIPTION OF THE DRAWINGS

One or more embodiments are illustrated by means of the corresponding drawings, which do not constitute a limitation of the embodiments, elements having the same reference numerals in the drawings are shown as similar elements, and the drawings do not constitute a limitation of proportion, wherein:

Fig. 1 is a flow chart of a controlling method for a compressor of an air conditioner provided by an embodiment of the present disclosure;
Fig. 2 is a flow chart of the controlling method for the compressor of the air conditioner provided by the other embodiment of the present disclosure;
Fig. 3 is a flow chart of the controlling method for the compressor of the air conditioner provided by the other embodiment of the present disclosure;
Fig. 4 is a schematic diagram of a controlling device for a compressor of an air conditioner provided by an embodiment of the present disclosure.

DETAILED DESCRIPTION OF THE EMBODIMENTS

In order to enable a more detailed understanding of the features and technical content of the embodiments of the present disclosure, the implementation of the embodiments of the present disclosure will be described in detail below in conjunction with the accompanying drawings, which are for illustration only and are not intended to limit the embodiments of the present disclosure. In the following technical description for convenience of explanation, several details are provided for a full understanding of the disclosed embodiments. However, one or more embodiments may still be practiced without these details. In other instances, the well-known structures and devices may simplify the disclosure in order to simplify the drawings.

The terms "first", "second" and the like in the specification and claims of embodiments of the present disclosure and the above drawings are used to distinguish similar elements and are not necessarily used to describe a particular order or priority. It should be understood that the data used in this way can be interchanged where appropriate for the embodiments of the present disclosure described herein. Furthermore, the terms "include" and "have" and any variations thereof are intended to cover a non-exclusive inclusion.

Unless otherwise illustrated, the term "a plurality of" means two or more.

In the embodiment of the present disclosure, the character "/" indicates that the front element and rear element are in an "or" relationship. For example, A/B illustrates A or B.

The term "and/or" is an association relationship that describes elements, indicating that there can be three relationships. For example, A and/or B represent relationships: A or B, or A and B.

It should be noted that the embodiments of the present disclosure and the features in the embodiments can be combined with each other without conflict.

When the air conditioner system is in heating operation, for example, normal heating mode, high-temperature self-cleaning mode (such as 56°C high temperature self-cleaning), defrosting to heating operation mode, etc., the operation of the compressor generally includes the increasing frequency operation stage, the constant frequency operation stage and the decreasing frequency operation stage to control the outlet air temperature to reach the target temperature. And each operation stage corresponds to its operating temperature range. By real-time detecting the relationship between the temperature of the inner coil and the operating temperature range, the compressor can be controlled to operate at increasing frequency, constant frequency, or decreasing frequency. The increasing frequency operation corresponds to an increasing frequency temperature range, for example, the increasing frequency temperature range is lower than a first temperature. The constant frequency operation corresponds to a constant frequency temperature range, for example, the constant frequency temperature range is greater than or equal to the first temperature and lower than a second temperature. The decreasing frequency operation corresponds to a decreasing frequency temperature range, for example, the decreasing frequency temperature range is greater than or equal to the second temperature and lower than or equal to a third temperature. In a case where the temperature of the inner coil is greater than the third temperature, the compressor is controlled to stop, and the third temperature can be defined as the shutdown protection temperature. The first temperature, the second temperature, and the third temperature can be determined according to the available practical scenarios. For example, the first temperature is 50°C to 53°C, the second temperature is generally 4°C to 7°C greater than the first temperature, and the third temperature is generally 5°C to 8°C greater than the second temperature. For example, the first temperature is 52°C, the second temperature is 57°C, and the third temperature is 63°C. In addition, in a case where the temperature of the inner coil is greater than the third temperature, the compressor is controlled to stop.

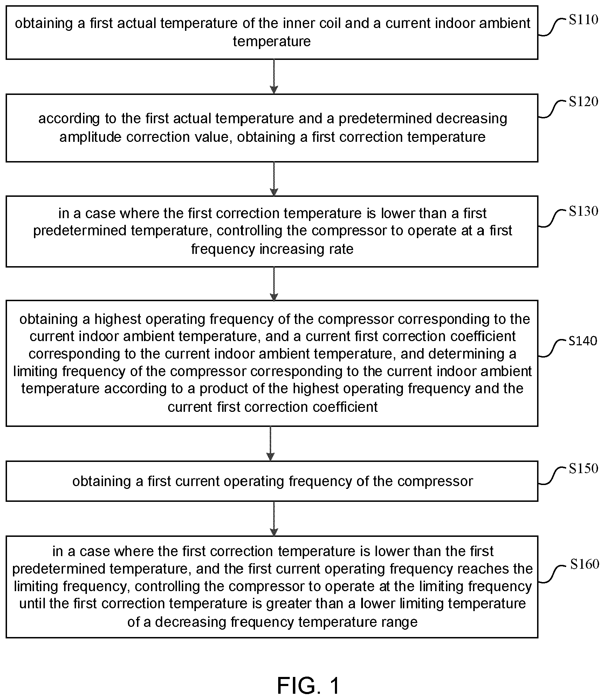

With reference to Fig. 1, the controlling method for the compressor of the air conditioner provided by the embodiment of the present disclosure, including:

S110, obtaining a first actual temperature of the inner coil and a current indoor ambient temperature.

The first actual temperature of the inner coil can be detected by a temperature sensor disposed in the middle of the inner coil, and the current indoor ambient temperature can be detected by a temperature sensor disposed indoors.

S120, according to the first actual temperature and a predetermined decreasing amplitude correction value, obtaining a first correction temperature.

In step S120, the predetermined decreasing amplitude correction value is a definite value. The predetermined decreasing amplitude correction value is provided to correct the decrease of the first actual temperature. That is, the predetermined decreasing amplitude correction value subtracted from the first actual temperature is the first correction temperature, so that the first correction temperature is lower than the first actual temperature, in which the compressor can be prevented from entering the decreasing frequency temperature range prematurely by determining according to the first actual temperature of the inner coil, from frequently entering the frequency cycle of decreasing-increasing, and from reducing the stability of the air conditioner, further from affecting the user experience.

Optionally, the predetermined decreasing amplitude correction value is 3°C to 7°C. Optionally, the predetermined decreasing amplitude correction values can be 3°C, 4°C, 5°C, 6°C and 7°C or any other value.

S130, in a case where the first correction temperature is lower than a first predetermined temperature, controlling the compressor to operate at a first frequency increasing rate.

The first predetermined temperature is a node of the increasing frequency temperature range of the compressor, when the first correction temperature is in the increasing frequency temperature range, the compressor is controlled to operate at increasing frequency. Optionally, the first predetermined temperature is any one value in the range of 50°C to 54°C, for example, 50°C, 51 °C, 52°C, 54°C etc.

Optionally, the first frequency increasing rate is 0.01 Hz/s to 1.5 Hz/s. Optionally, the first frequency increasing rate is 0.05 Hz/s to 1.4 Hz/s. Optionally, the first frequency increasing rate is 0.08 Hz/s to 1.2 Hz/s. Optionally, the first frequency increasing rate is 0.1 Hz/s to 1 Hz/s.

S140, obtaining a highest operating frequency of the compressor corresponding to the current indoor ambient temperature, and a current first correction coefficient corresponding to the current indoor ambient temperature, and determining a limiting frequency of the compressor corresponding to the current indoor ambient temperature according to a product of the highest operating frequency and the current first correction coefficient.

In step S140, from a predetermined first corresponding relationship of the indoor ambient temperature and the highest operating frequency of the compressor and a predetermined second corresponding relationship of the indoor ambient temperature and the first correction coefficient, respectively reading the highest operating frequency of the compressor corresponding to the current indoor ambient temperature and the current first correction coefficient corresponding to the current indoor ambient temperature.

The first corresponding relationship of the indoor ambient temperature and the highest operating frequency of the compressor can be obtained by detecting the highest frequency of amplifying frequency heating of the compressor under different indoor ambient temperatures, the highest frequency of amplifying frequency heating is the highest operating frequency of the compressor corresponding to the current indoor ambient temperature.

The higher the indoor ambient temperature, the lower the highest frequency of the compressor allowed by the air conditioner system, so the increasing space of the frequency of the compressor is small. Therefore, the first correction coefficient is configured to correct the decreasing amplitude of the highest operating frequency of the compressor, so as to avoid the fast increasing frequency of the compressor in the increasing frequency operation stage, prevent the frequency of the compressor from increasing to the highest operating frequency or even exceeding the highest operating frequency and avoid the compressor from the shutdown.

Optionally, obtaining a current first correction coefficient corresponding to the current indoor ambient temperature, includes: according to a negative correlation relationship between the indoor ambient temperature and the first correction coefficient, determining the current first correction coefficient corresponding to the current indoor ambient temperature; wherein, the first correction coefficient is in a range of greater than or equal to 0.4 and lower than 1. That is, the higher the indoor ambient temperature is, the smaller the first correction coefficient is, so that the limiting frequency of the compressor is smaller, which is determined according to the product of the highest operating frequency and the current first correction coefficient, so that the frequency increasing range of the compressor is reduced, thereby ensuring that the operating frequency of the compressor is within an allowable range and avoiding shutdown.

Optionally, the predetermined corresponding relationship between the indoor ambient temperature and the first correction coefficient, includes a plurality of continuous indoor ambient temperature sections, and each indoor ambient temperature section corresponds to one first correction coefficient. In the embodiment, the indoor ambient temperature range is divided to a plurality of indoor ambient temperature sections by setting nodal temperatures according to the conventional range of the indoor ambient temperature. There is no limit to the amount of indoor ambient temperature sections, which can be 2, 3, 4, or more.

Optionally, the amount of indoor ambient temperature sections is 3.

Optionally, the first indoor ambient temperature section is lower than 17°C. The second indoor temperature section is from greater than or equal to 17°C to lower than 30°C. The third indoor ambient temperature section is greater than or equal to 30°C.

Optionally, the variation of the first correction coefficient is a synchronous linear or an asynchronous fold line pattern with the variation of the indoor ambient temperature.

Optionally, the first indoor ambient temperature section is lower than 17°C, and the first correction coefficient is 0.9. The second indoor temperature section is from greater than or equal to 17°C to lower than 30°C, and the first correction coefficient is 0.8. The third indoor ambient temperature section is greater than or equal to 30°C, and the first correction coefficient is 0.5. In the embodiment, the variation of the first correction coefficient is in an asynchronous fold line pattern with the variation of the indoor ambient temperature.

Optionally, obtaining the current first correction coefficient corresponding to the current indoor ambient temperature, includes: obtaining the current indoor ambient temperature and determining the temperature section where the current indoor environment is located; according to the corresponding relationship between the temperature section and the first correction system, determining the current first correction coefficient corresponding to the current indoor environment.

S150, obtaining a first current operating frequency of the compressor.

S160, in a case where the first correction temperature is lower than the first predetermined temperature, and the first current operating frequency reaches the limiting frequency, controlling the compressor to operate at the limiting frequency as the constant frequency, until the first correction temperature is greater than a lower limiting temperature of a decreasing frequency temperature range.

In step S160, when the first correction temperature is within the increasing frequency temperature range, if the operating frequency of the compressor is increased to the limiting frequency, controlling the compressor to exit the increasing frequency operation and enter the constant frequency operation, so as to avoid the problem that the increasing frequency of the compressor is too high caused by the hysteresis of the temperature change of the inner coil and causes the compressor to the shutdown. The lower limiting temperature of the decreasing frequency temperature range can be determined according to the available practical scenarios, such as the second temperature mentioned above. For example, 57°C.

In the process of realizing the embodiment of the present disclosure, it is found that under different indoor ambient temperatures, the temperature increasing rate of the inner coil is different, and thus the highest operating frequency in the increasing frequency operation stage of the compressor is different. And under different indoor ambient temperatures, the highest operating frequency of the compressor can reaches is also different. Therefore, the highest operating frequency of the compressor is corrected through introducing the indoor ambient temperature, and the corrected highest operating frequency is taken as the limiting frequency, and the limiting frequency is taken as operating frequency in the constant frequency operation stage, which effectively solves the problem of too high compressor frequency caused by the hysteresis of the temperature change of the inner coil. And while the frequency of the constant frequency operation is forcedly controlled to reduce, the actual temperature of inner coil can be corrected by decreasing amplitude, and the corrected temperature is taken as the temperature parameter to control the operation of the compressor, which can avoid the compressor from frequently entering the frequency cycle of increasing-constant-decreasing, improve the stability of the compressor, avoid the fluctuation of the air outlet temperature of the air conditioner caused by the frequent fluctuation of the compressor frequency, ensure the stability of ambient temperature and improve the user experience.

The controlling method of the embodiment of the present disclosure is adapted to the control of the compressor in the heating operation of the air conditioner system, for example, normal heating mode, high-temperature self-cleaning mode (such as 56°C high temperature self-cleaning), defrosting to heating operation mode, etc. It can effectively reduce the shutdown frequency of the compressor in the heating operation stage, and even avoid the compressor crash.

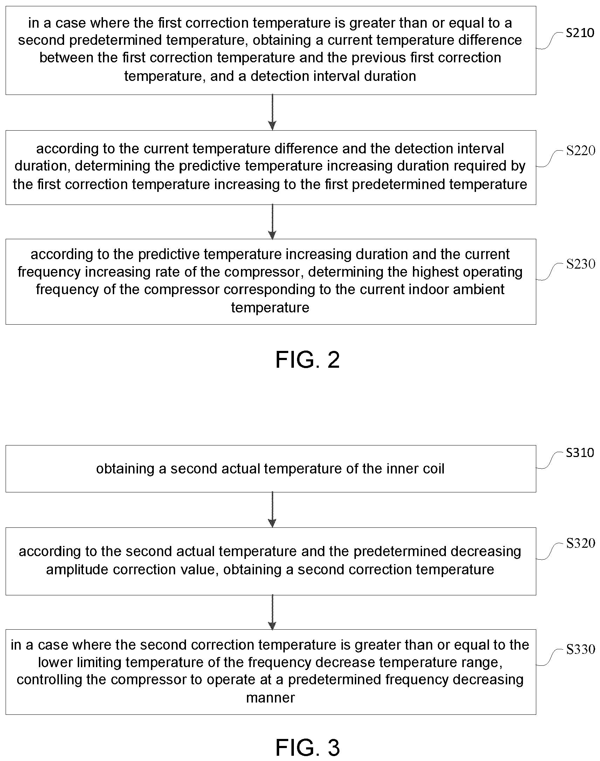

In Step S140 of the embodiment the present disclosure, the highest operating frequency of the compressor can be obtained by the following methods besides the predetermined first corresponding relationship, as shown in Fig. 2, obtaining the highest operating frequency of the compressor corresponding to the current indoor ambient temperature, includes:

S210, in a case where the first correction temperature is greater than or equal to a second predetermined temperature, obtaining a current temperature difference between the first correction temperature and the previous first correction temperature, and a detection interval duration.

The second predetermined temperature is lower than the first predetermined temperature. For example, the second predetermined temperature is 5°C to 8°C lower than the first predetermined temperature. For example, the second predetermined temperature is 5°C, 6°C, 7°C and 8°C lower than the first predetermined temperature, and the like. Optionally, the first predetermined temperature is 52 °C , the second predetermined temperature is 47°C.

S220, according to the current temperature difference and the detection interval duration, determining the predictive temperature increasing duration required by the first correction temperature increasing to the first predetermined temperature.

Optionally, according to the ratio of the current temperature difference and the detection interval duration, determining a current temperature increasing rate, and according to the ratio of the increased temperature of the first correction temperature increasing to the first predetermined temperature and the current temperature increasing rate, determining the predictive temperature increasing duration.

In the embodiment, the increased temperature is divided by the current temperature increasing rate to obtain the time required by the current temperature increasing to the first predetermined temperature at the current temperature increasing rate, which is, the predictive temperature increasing duration. The predictive temperature increasing duration $t$ is obtained by the following equation (1):

$$t = \Delta T / v \qquad (1)$$

where $\Delta T$ is the increased temperature, $v$ is the current temperature increasing rate; $v = \Delta T' / \Delta t$, where $\Delta T'$ is the current temperature difference, and $\Delta t$ is the detection interval duration.

Optionally, according to the current temperature difference and the detection interval duration, determining the predictive temperature increasing duration required by the first correction temperature increasing to the first predetermined temperature, includes: according to the ratio of the current temperature difference and the detection interval duration, determine a current temperature increasing rate; according to a ratio of the increased temperature of the first correction temperature increasing to the first predetermined temperature and the current temperature increasing rate, determining an initial predictive temperature increasing duration; according to the detection interval duration and the initial predictive temperature increasing duration (the ratio of the initial predictive temperature increasing duration to the detection interval duration), obtaining a predictive detection times; obtaining a current second correction coefficient corresponding to the current indoor ambient temperature; and according to the detection interval duration, the second correction coefficient and the predictive detection times, determining the predictive temperature increasing duration. In the embodiment, the initial predictive temperature increasing duration is obtained based on the current temperature increasing rate. In the subsequent temperature increasing process, because of the influence of the hysteresis of the actual temperature of the inner coil and the frequency increasing rate of the compressor, the temperature increasing rate will show a certain increasing trend. Therefore, the second correction coefficient is provided to correct the detection interval duration, so as to obtain a more accurate predictive temperature increasing duration, and then the predictive highest operating power is more accurate.

The higher the indoor ambient temperature, the actual temperature of the inner coil increases rapidly at the later stage of the increasing frequency operation. That is, as the increasing frequency operation progresses, the temperature increasing duration required by the actual temperature of the inner coil to increase by the current temperature difference is shorter. Therefore, based on the detection interval duration required by the current temperature difference, the second correction coefficient is configured to correct the detection interval duration.

Optionally, the predictive temperature increasing duration $t$ is obtained by the following equation (2):

$$t = \Delta t \cdot \left(1 + \sum_{i=1}^{n-1} (1 - \alpha)^i\right) \qquad (2)$$

where $\Delta t$ is the detection interval duration; $\alpha$ is the second correction coefficient, which is greater than 0 and lower than or equal to 0.1; n is the detection times, $n = [t^o / \Delta t]$, where $t^o$ is calculated by equation (1).

Optionally, obtaining a current second correction coefficient corresponding to the current indoor ambient temperature, includes: according to a positive correlation relationship between the indoor ambient temperature and the second correction coefficient, determining the current second correction coefficient corresponding to the current indoor ambient temperature; wherein, the second correction coefficient is in a range from greater than 0 to lower than or equal to 0.1. That is, the higher the indoor ambient temperature, the larger the second correction coefficient, so that the corrected temperature increasing duration (the time required by the actual temperature of the inner coil to increase by the increased temperature of the current temperature difference value) is shorter, and the obtained predictive temperature increasing duration is more accurate.

Optionally, the predetermined corresponding relationship between the indoor ambient temperature and the second correction coefficient includes a plurality of continuous indoor ambient temperature sections, and each indoor ambient temperature section corresponds to one second correction coefficient. In the embodiment, according to the conventional range of the indoor ambient temperature, the indoor ambient temperature range is divided to a plurality of indoor ambient temperature sections by setting nodal temperatures. There is no limit to the amount of indoor ambient temperature sections, which can be 2, 3, 4, or more.

Optionally, the amount of indoor ambient temperature sections is 3.

Optionally, the first indoor ambient temperature section is lower than 17°C; The second indoor temperature range is greater than or equal to 17°C and lower than 30°C; The third indoor ambient temperature range is greater than or equal to 30°C.

Optionally, the variation of the second correction coefficient is in a synchronous linear or an asynchronous fold line pattern with the variation of the indoor ambient temperature.

Optionally, the first indoor ambient temperature section is lower than 17°C, and the second correction coefficient is 0.01; The second indoor temperature section is greater than or equal to 17°C and lower than 30°C, and the second correction coefficient is 0.05; The third indoor ambient temperature section is greater than or equal to 30°C, and the second correction coefficient is 0.08. In the embodiment, the variation of the second correction coefficient changes in an asynchronous fold line pattern with the variation of the indoor ambient temperature.

S230, according to the predictive temperature increasing duration and the current frequency increasing rate of the compressor, determining the highest operating frequency of the compressor corresponding to the current indoor ambient temperature.

Optionally, obtaining a predictive increased frequency of the compressor, according to the product of the predictive temperature increasing duration and the current frequency increasing rate of the compressor. And adding the predictive increased frequency to the current operating frequency of the compressor is the predictive highest operating frequency of the compressor. The current operating frequency of the compressor may be obtained at the same time as the first correction value obtained in step S210.

The current frequency increasing rate of the compressor is the first frequency increasing rate.

In the embodiment, the second predetermined temperature is lower than the first predetermined temperature, that is, determining a temperature node in the increasing frequency temperature range, when the correction temperature of the inner coil is greater than or equal to the temperature node, the highest operating frequency of the compressor is estimated by utilizing the first correction temperature obtained in real-time, the detection interval duration between the first correction temperature obtained in real-time and the actual temperature of the inner coil obtained in the previous detection, and the operating frequency of the compressor, so that the highest operating frequency of the compressor obtained is more accurate.

That is, in the current indoor environment, the highest operating frequency of the compressor can be obtained from the predetermined first corresponding relationship, or the highest operating frequency can be estimated by the real-time correction temperature change of the inner coil and the operating frequency of the compressor during the increasing frequency operation.

In step S160 of the embodiment of the present disclosure, it can be understood that during the constant frequency operation of the control compressor at the limiting frequency, the actual temperature of the inner coil is continuously obtained and the correction temperature is obtained by decreasing amplitude correction. In a case where the correction temperature is greater than or equal to the lower limiting temperature of the decreasing frequency temperature range, the constant frequency operation is exited and the decreasing frequency operation is entered.

With reference to Fig. 3, the embodiment of the present disclosure provides the controlling method for a compressor of an air conditioner, after controlling the compressor to operate at the limiting frequency as the constant frequency in step S160, further including:

S310, obtaining a second actual temperature of the inner coil.

The second actual temperature of the inner coil can be detected by a temperature sensor disposed in the middle of the inner coil.

S320, according to the second actual temperature and the predetermined decreasing amplitude correction value, obtaining a second correction temperature.

Herein, the predetermined decreasing amplitude correction value is the same as the predetermined decreasing amplitude correction value in step S120, and will not be described here.

S330, in a case where the second correction temperature is greater than or equal to the lower limiting temperature of the decreasing frequency temperature range, controlling the compressor to operate at a predetermined frequency decreasing manner.

In some embodiments, in a case where the second correction temperature is greater than or equal to the lower limiting temperature of the decreasing frequency temperature range, controlling the compressor to operate at a predetermined frequency decreasing manner, including: in a case where the second correction temperature is greater than or equal to a third predetermined temperature, controlling the compressor to operate at a first frequency decreasing rate; In a case where the second correction temperature is greater than or equal to a fourth predetermined temperature and lower than the third predetermined temperature, controlling the compressor to operate at a second frequency decreasing rate. Wherein the first frequency decreasing rate is greater than the second frequency decreasing rate, the fourth predetermined temperature is greater than or equal to the lower limiting temperature of the decreasing frequency temperature range. In the embodiment, the decreasing frequency operation of the compressor is divided to a fast decreasing frequency operation and a slow decreasing frequency operation, so that the operating frequency of the compressor is controlled more precisely, the fluctuations of operating frequency of the compressor is reduced, the stability of the air conditioning outlet temperature can be ensured, thereby the indoor ambient temperature is stable, the user experience is improved.

Optionally, the fourth predetermined temperature is the lower limiting temperature of the decreasing frequency temperature range, which is the second temperature. The third predetermined temperature is greater than the fourth predetermined temperature and lower than the shutdown protection temperature (the third temperature). That is, the third predetermined temperature is in the decreasing frequency temperature range.

Optionally, the third predetermined temperature is a middle value of the decreasing frequency temperature range. For example, the fourth predetermined temperature is 57°C, the third predetermined temperature is 60°C.

Optionally, the first frequency decreasing rate is 0.5 Hz/s to 1.5Hz/s, the second frequency decreasing rate is lower than the first frequency decreasing rate. Optionally, the first frequency decreasing rate is 0.8 Hz/s to 1.2Hz/s. Optionally, the first frequency decreasing rate is 1 Hz/s.

Optionally, the second frequency decreasing rate is 0.01 Hz/s to 0.5Hz/s. Optionally, the second frequency decreasing rate is 0.05 Hz/s to 0.2Hz/s. Optionally, the second frequency decreasing rate is 0.08 Hz/s to 0.15Hz/s. Optionally, the second frequency decreasing rate is 0.1Hz/s.

Optionally, the controlling method, further includes: obtaining a second current operating frequency of the compressor; According to the limiting frequency and the second current operating frequency, obtaining a current frequency decreasing amplitude; In a case where the current frequency decreasing amplitude is greater than a predetermined frequency decreasing amplitude and the compressor is in the decreasing frequency operation at the first frequency decreasing rate, controlling the compressor to operate at a second frequency decreasing rate. In the embodiment, when the compressor is at the fast decreasing frequency operation, a frequency decreasing amplitude parameter is introduced, in a case where the frequency decreasing amplitude is greater than the predetermined frequency decreasing amplitude, directly exiting the fast decreasing frequency operation, and entering the slow decreasing frequency operation. Optionally, the predetermined frequency decreasing amplitude is 15Hz to 20Hz. Optionally, the predetermined frequency decreasing amplitude is 18Hz.

Optionally, in a case where the second correction temperature is greater than a fifth predetermined temperature, controlling the compressor to stop. Wherein the fifth predetermined temperature is greater than the third predetermined temperature. The fifth predetermined temperature is the shutdown protection temperature, for example, the fifth predetermined temperature is 63°C.

In some embodiments, the step S130, further including: S131, in a case where the first correction temperature is lower than a sixth predetermined temperature, controlling the compressor to operate at a second frequency increasing rate. Wherein the sixth predetermined temperature is lower than the first predetermined temperature, the second frequency increasing rate is greater than the first frequency increasing rate. That is, in the increasing frequency temperature range, adding one nodal temperature of the sixth predetermined temperature to divide the increasing frequency operation into a fast increasing frequency operation and a slow increasing frequency operation. The operating frequency of the compressor is controlled more precisely, the fluctuations of operating frequency of the compressor is reduced, the stability of the air conditioner outlet temperature can be ensured, thereby the indoor ambient temperature is stable, the user experience is improved.

The sixth predetermined temperature is lower than the first predetermined temperature, the difference between the sixth predetermined temperature and the first predetermined temperature is 3°C to 6°C. Optionally, the difference is 4°C to 6°C. Optionally, the difference is 5°C. For example, the first predetermined temperature is 52°C, the sixth predetermined temperature is 47°C.

Optionally, the sixth predetermined temperature is equal to the second predetermined temperature. That is, in the slow increasing frequency operation stage of the compressor, executing the method of obtaining the highest operating frequency of the compressor corresponding to the current indoor ambient temperature as shown in Fig.2.

In the embodiment, the second frequency increasing rate is 0.5Hz/s to 1.5 Hz/s, the first frequency increasing rate is lower than the second frequency increasing rate. Optionally, the second frequency increasing rate is 0.8Hz/s to 1.2 Hz/s. Optionally, the second frequency increasing rate is 1 Hz/s.

Optionally, the first frequency increasing rate is 0.01Hz/s to 0.5 Hz/s. Optionally, the first frequency increasing rate is 0.05Hz/s to 0.2 Hz/s. Optionally, the first frequency increasing rate is 0.08Hz/s to 0.15 Hz/s. Optionally, the first frequency increasing rate is 0.1 Hz/s.

Optionally, the controlling method further includes: obtaining a current increasing frequency operation duration of the compressor; in a case where the current increasing frequency operation duration is greater than or equal to a setting increasing frequency operation duration, and the first correction temperature is lower than the sixth predetermined temperature, replacing the first correction temperature with a reference temperature, and executing the control of the compressor according to the reference temperature. The reference temperature is a constant value which is greater than the sixth predetermined temperature and lower than the first predetermined temperature. In the embodiment, if the correction temperature of the inner coil is still lower than the sixth predetermined temperature after the setting increasing frequency operation duration, it indicates that the temperature of the inner coil lags seriously, therefore, exiting the fast increasing frequency operation, and entering the low increasing frequency operation, thereby ensuring the stability of the air conditioning outlet temperature and the stability of the indoor temperature, and ensuring the user experience.

Optionally, the first predetermined temperature is 52°C, the sixth predetermined temperature is 47°C, the reference temperature is 48°C.

The setting increasing frequency operation duration can be determined according to the available practical scenarios. For example, the setting increasing frequency operation duration is 1min to 5min, specifically 1min, 2min, 3min, or 5min, etc.

Optionally, after the step S131, the method further includes the following steps: S132, in a case where the first correction temperature is greater than or equal to a seventh predetermined temperature and lower than the sixth predetermined temperature, obtaining a first temperature difference between the first correction temperature and the previous first correction temperature.

The seventh predetermined temperature is lower than the sixth predetermined temperature. Optionally, the seventh predetermined temperature is 10°C to 20°C lower than the sixth predetermined temperature. Optionally, the seventh predetermined temperature is 15°C to 20°C lower than the sixth predetermined temperature. Optionally, the seventh predetermined temperature is 17°C lower than the sixth predetermined temperature.

Optionally, the seventh predetermined temperature is 27°C to 37°C. Optionally, the seventh predetermined temperature is 27°C to 32°C. Optionally, the seventh predetermined temperature is 30°C.

Because of the first correction temperature is obtained by decreasing amplitude correcting the first actual temperature of the inner coil with the predetermined constant value, therefore, the first temperature difference is also the difference between the first actual temperature and the previous first actual temperature. In the embodiment, the first actual temperature of the inner coil is detected by the setting detection interval duration, the detection interval duration is not limited. Optionally, the detection interval duration is a setting value, for example, 40s, 30s, 20s or 10s.

The first temperature difference is the difference of two first actual temperature detected at two adjacent detection moments, and the previous first actual temperature is the first actual temperature detected at the previous detection moment at which the detection moment in the adjacent two detection moments is preceded. Specifically, the first temperature difference is obtained by the previous first actual temperature subtracted from the current first actual temperature.

S133, in a case where the first temperature difference is greater than or equal to a first setting temperature difference, controlling the compressor to operate at the second frequency increasing rate.

The first setting temperature difference is a predetermined value, and can be determined according to the available practical scenarios. Optionally, the first setting temperature difference is 0.4 °C to 1.2 °C. Optionally, the first setting temperature difference is 0.5°C. Of course, the first setting temperature difference can also be other values, such as 0.6°C, 0.8°C, 1°C, 1.1°C, and 1.2°C.

In the embodiment, a temperature increased amount (for example, a third temperature difference) within a setting detection interval duration is provided in the fast increasing frequency operation stage of the compressor, and the lag degree of the temperature (actual temperature or correction temperature) of the inner coil is considered. At the same time, a nodal temperature (fifth predetermined temperature) is provided in the increasing frequency temperature range. In a case where it is lower than the nodal temperature, controlling the compressor to operate at the first frequency increasing rate; in a case where it is greater than the nodal temperature, and the third temperature difference is greater than or equal to the third setting temperature difference, which shows that the fast increasing frequency operation of the compressor has accumulated a lot of heat, and the lag degree is large, at this time, the frequency increasing rate of the compressor is reduced to the second frequency increasing rate, which is a slow increasing frequency operation. That is, during the increasing frequency operation, the temperature increased amount in the setting detection interval duration is taken as a switching parameter between the fast increasing frequency operation and the slow increasing frequency operation, which reduces the hysteresis degree between the inner coil temperature and the compressor frequency increasing, avoids the phenomenon of the compressor shutdown caused by the compressor frequency increasing too fast, and effectively solves the problem of too high compressor frequency caused by the hysteresis of the temperature change of the inner coil.

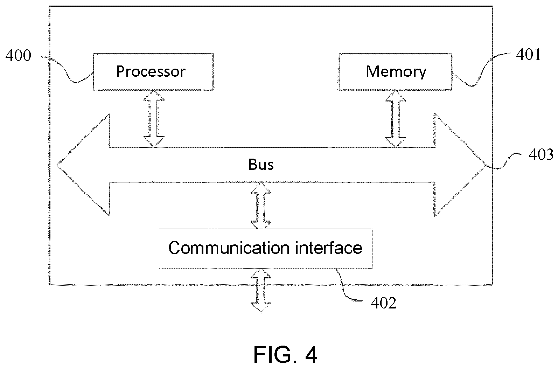

With reference to Fig. 4, the embodiment of the present disclosure provides a controlling device for a compressor of an air conditioner, which includes a processor 400 and a memory 401. Optionally, the device may also include a communication interface 402 and a bus 403. The processor 400, the communication interface 402, and the memory 401 are communicated with each other through the bus 403. The communication interface 402 may be configured for information transmission. The processor 400 may invoke logic instructions in the memory 401 to execute the controlling method for the compressor of the air conditioner in the above-described embodiment.

Further, the logic instructions in the memory 401 described above may be realized in the form of software functional units and may be stored in a computer-readable storage medium when sold or used as a separate product.

As a computer-readable storage medium, the memory 401 may be configured to store software programs, and computer executable programs, such as program instructions/modules corresponding to the methods in embodiments of the present disclosure. The processor 400 executes the function application and data processing by running the program instructions/modules stored in the memory 401 that is to implement the controlling method for the compressor of the air conditioner in the above-described embodiment.

The memory 401 may include a stored program area and a stored data area wherein the stored program area may store an operating system and an application program required for at least one function. The storage data area may store data created according to the use of the terminal device. In addition, the memory 401 may include a high-speed random access memory and may also include a non-volatile memory.

The embodiment of the present disclosure provides an air conditioner including the controlling device for a compressor of an air conditioner.

The embodiments of the present disclosure provide a computer-readable storage medium storing computer-executable instructions configured to execute the above-described controlling method for a compressor of an air conditioner.

The embodiments of the present disclosure provide a computer program product including a computer program stored on a computer-readable storage medium, the computer program including program instructions that, when executed by a computer, cause the computer to execute the above-described controlling method for a compressor of an air conditioner.

The computer-readable storage medium may be a transient computer-readable storage medium or a non-transient computer-readable storage medium.

The technical proposal of the embodiment of the present disclosure can be embodied in the form of a software product, The computer software product is stored in a storage medium and includes one or more instructions for causing a computer device (which may be a personal computer, server, or network device, etc.) to perform all or part of the steps of the method described in the embodiment of the present disclosure. The mentioned storage medium may be a non-transient storage medium, including a U disk, a mobile hard disk, a Read-Only Memory (ROM), a Random Access Memory (RAM), a magnetic disk or an optical disk, and other media capable of storing program codes or maybe a transient storage medium.

The above description and drawings sufficiently illustrate embodiments of the present disclosure to enable to practice by those skilled in the art. Other embodiments may include structural logical electrical procedural and other modifications. Embodiments represent only possible variations. Unless explicitly required, individual parts and functions are optional, and the order of operation can vary. Portions and features of some embodiments may be included in or in place of portions and features of other embodiments. Furthermore, the terms used in the present disclosure are used only to describe embodiments and are not used to limit the claims. As used in the embodiments and the description of the claims, the singular forms of "a", "an" and "the" are intended to include the plural forms as well, unless the context clearly indicates. Similarly, the term "and/or" as used in this application means encompassing one or more associated lists of any and all possible combinations. Additionally, when used in this application, the term "comprise" and its variants "comprises" and/or "comprising", etc. refer to the presence of stated features, totals, steps, operations, elements, and/or components, but do not exclude the presence or addition of one or more other features, totals, steps, operations, elements, components, and/or groupings of these. In the absence of further limitations, an element defined by the phrase "includes an ..." does not preclude the existence of another identical element in the process, method, or device in which the element is included. Herein each embodiment may be highlighted as being different from the other embodiments and the same similar parts between the various embodiments may be referred to with respect to each other. For the method, product, etc. disclosed by the embodiment, if it corresponds to the method portion disclosed by the embodiment, reference can be made to the description of the method portion where relevant.

Those skilled in the art will appreciate that the various example units and algorithm steps described in connection with the embodiments disclosed herein can be implemented in electronic hardware or a combination of computer software and electronic hardware. Whether these functions are performed in hardware or software can depend on the specific application and design constraints of the technical solution. The skilled artisan may use different methods for each particular application to implement the described functionality but such implementation should not be considered outside the scope of the disclosed embodiments. It will be apparent to the skilled person that for convenience and conciseness of description, the specific operating processes of the above-described systems, devices, and units may be referred to the corresponding processes in the mentioned method embodiments and will not be repeated herein.

In the embodiments disclosed herein, the disclosed methods, and products (including but not limited to devices, devices, etc.) may be implemented in other ways. For example, the above-described embodiment of the device is only schematic, for example, the division of the unit may be only a logical function division, and in practice, there may be another division mode, for example, multiple units or components may be combined or integrated into another system, or some features may be ignored or not performed. In addition, the coupling or direct coupling or communication connection between each other shown or discussed may be indirect coupling or communication connection through some interface, device, or unit, and may be electrical, mechanical, or another form. The elements illustrated as separate elements may or may not be physically separated, and the elements displayed as elements may or may not be physical elements, i.e. may be located in one place or may be distributed over a plurality of network elements. Some or all of the units can be selected according to actual needs to realize the embodiment. In addition, each functional unit in the embodiment of the present disclosure may be integrated into one processing unit, each unit may exist physically alone, or two or more units may be integrated into one unit.

The flowcharts and block diagrams in the accompanying drawings illustrate the architecture functionality and operation of possible implementations of systems methods and computer program products according to embodiments of the present disclosure. In this regard, each block in a flow chart or block diagram may represent a module, program segment, or part of code containing one or more executable instructions for performing a specified logical function. In some alternative implementations, the functions indicated in the boxes may also occur in a different order than those indicated in the drawings. For example, two successive boxes can actually be executed substantially in parallel, or they can sometimes be executed in reverse order, depending on the functionality involved. In the description corresponding to the flowcharts and block diagrams in the drawings, the operations or steps corresponding to different blocks may also occur in a different order than that disclosed in the description, and sometimes there is no specific order between the different operations or steps. For example, two successive operations or steps can actually be performed substantially in parallel, or they can sometimes be performed in reverse order, depending on the functionality involved. Each block in the block diagram and/or flow chart, and a combination of the blocks in the block diagram and/or flow chart, may be implemented in a dedicated hardware-based system that performs a specified function or action or may be implemented in a combination of dedicated hardware and computer instructions.

## Claims

1. A controlling method for a compressor of an air conditioner, comprising:

   obtaining a first actual temperature of an inner coil and a current indoor ambient temperature;
   according to the first actual temperature and a predetermined decreasing amplitude correction value, obtaining a first correction temperature;
   in case where the first correction temperature is lower than a first predetermined temperature, controlling the compressor to operate at a first frequency increasing rate;
   obtaining a highest operating frequency of the compressor corresponding to the current indoor ambient temperature, and a current first correction coefficient corresponding to the current indoor ambient temperature, and determining a limiting frequency of the compressor corresponding to the current indoor ambient temperature according to a product of the highest operating frequency and the current first correction coefficient;
   obtaining a first current operating frequency of the compressor; and
   in case where the first correction temperature is lower than the first predetermined temperature, and the first current operating frequency reaches the limiting frequency, controlling the compressor to operate at the limiting frequency as constant frequency, until the first correction temperature is greater than a lower limiting temperature of a decreasing frequency temperature range.

2. The controlling method according to claim 1, wherein the obtaining the highest operating frequency of the compressor corresponding to the current indoor ambient temperature, comprises:

   in case where the first correction temperature is greater than or equal to a second predetermined temperature, obtaining a current temperature difference between the first correction temperature and the previous first correction temperature, and a detection interval duration;

according to the current temperature difference and the detection interval duration, determining a predictive temperature increasing duration required by the first correction temperature increasing to the first predetermined temperature; and

according to the predictive temperature increasing duration and a current frequency increasing rate of the compressor, determining the highest operating frequency of the compressor corresponding to the current indoor ambient temperature.

3. The controlling method according to claim 2, wherein the according to the current temperature difference and the detection interval duration, determining the predictive temperature increasing duration required by the first correction temperature increasing to the first predetermined temperature, comprises:

according to a ratio of the current temperature difference and the detection interval duration, determining a current temperature increasing rate;

according to a ratio of the increased temperature of the current correction temperature increasing to the first predetermined temperature and the current temperature increasing rate, determining an initial predictive temperature increasing duration;

according to the detection interval duration and the initial predictive temperature increasing duration, obtaining a predictive detection times;

obtaining a current second correction coefficient corresponding to the current indoor ambient temperature;

according to the detection interval duration, the second correction coefficient and the predictive detection times, determining the predictive temperature increasing duration.

4. The controlling method according to claim 3, wherein the obtaining a current second correction coefficient corresponding to the current indoor ambient temperature, comprises:

according to a positive correlation relationship between the indoor ambient temperature and the second correction coefficient, determining the current second correction coefficient corresponding to the current indoor ambient temperature; wherein, the second correction coefficient is in a range from greater than 0 to lower than or equal to 0.1.

5. The controlling method according to any one of claims 1 to 4, wherein the obtaining a current first correction coefficient corresponding to the current indoor ambient temperature, comprises:

according to a negative correlation relationship between the indoor ambient temperature and the first correction coefficient, determining the current first correction coefficient corresponding to the current indoor ambient temperature; wherein, the first correction coefficient is in a range of greater than or equal to 0.4 and lower than 1.

6. The controlling method according to any one of claims 1 to 4,
   after controlling the compressor to operate at the limiting frequency as constant frequency, further comprising:

obtaining a second actual temperature of the inner coil;

according to the second actual temperature and the predetermined decreasing amplitude correction value, obtaining a second correction temperature; and

in case where the second correction temperature is greater than or equal to the lower limiting temperature of the decreasing frequency temperature range, controlling the compressor to operate at a predetermined frequency decreasing manner.

7. The controlling method according to claims 6, wherein the in case where the second correction temperature is greater than or equal to the lower limiting temperature of the decreasing frequency temperature range, controlling the compressor to operate at a predetermined frequency decreasing manner, comprises:

in case where the second correction temperature is greater than or equal to a third predetermined temperature, controlling the compressor to operate at a first frequency decreasing rate; and

in case where the second correction temperature is greater than or equal to a fourth predetermined temperature and lower than the third predetermined temperature, controlling the compressor to operate at a second frequency decreasing rate;

wherein the first frequency decreasing rate is greater than the second frequency decreasing rate; and the fourth predetermined temperature is greater than or equal to the lower limiting temperature of the decreasing frequency temperature range.

8. The controlling method according to claims 7,further comprising:

   obtaining a second current operating frequency of the compressor;
   according to the limiting frequency and the second current operating frequency, obtaining a current frequency decreasing amplitude; and
   in case where the current frequency decreasing amplitude is greater than a predetermined frequency decreasing amplitude and the frequency decreasing operation at the first frequency decreasing rate, controlling the compressor to operate at a second frequency decreasing rate.

9. A controlling device for a compressor of an air conditioner, comprising a processor and a memory storing program instructions, wherein
   the processor is configured to execute the controlling method for the compressor of the air conditioner according to any one of claims 1 to 8 when executing the program instructions.

10. An air conditioner, comprising:
    the controlling device for the compressor of the air conditioner according to claim 9.

obtaining a first actual temperature of the inner coil and a current indoor ambient temperature ⟋ S110

according to the first actual temperature and a predetermined decreasing amplitude correction value, obtaining a first correction temperature ⟋ S120

in a case where the first correction temperature is lower than a first predetermined temperature, controlling the compressor to operate at a first frequency increasing rate ⟋ S130

obtaining a highest operating frequency of the compressor corresponding to the current indoor ambient temperature, and a current first correction coefficient corresponding to the current indoor ambient temperature, and determining a limiting frequency of the compressor corresponding to the current indoor ambient temperature according to a product of the highest operating frequency and the current first correction coefficient ⟋ S140

obtaining a first current operating frequency of the compressor ⟋ S150

in a case where the first correction temperature is lower than the first predetermined temperature, and the first current operating frequency reaches the limiting frequency, controlling the compressor to operate at the limiting frequency until the first correction temperature is greater than a lower limiting temperature of a decreasing frequency temperature range ⟋ S160

FIG. 1

in a case where the first correction temperature is greater than or equal to a second predetermined temperature, obtaining a current temperature difference between the first correction temperature and the previous first correction temperature, and a detection interval duration — S210

according to the current temperature difference and the detection interval duration, determining the predictive temperature increasing duration required by the first correction temperature increasing to the first predetermined temperature — S220

according to the predictive temperature increasing duration and the current frequency increasing rate of the compressor, determining the highest operating frequency of the compressor corresponding to the current indoor ambient temperature — S230

FIG. 2

obtaining a second actual temperature of the inner coil — S310

according to the second actual temperature and the predetermined decreasing amplitude correction value, obtaining a second correction temperature — S320

in a case where the second correction temperature is greater than or equal to the lower limiting temperature of the frequency decrease temperature range, controlling the compressor to operate at a predetermined frequency decreasing manner — S330

FIG. 3

400 — Processor

401 — Memory

Bus

403

Communication interface

402

FIG. 4

## INTERNATIONAL SEARCH REPORT

| International application No. |
|---|
| **PCT/CN2022/077570** |

**A. CLASSIFICATION OF SUBJECT MATTER**

F24F 11/86(2018.01)i; F24F 11/64(2018.01)i; F24F 11/61(2018.01)i; F24F 140/20(2018.01)i; F24F 110/10(2018.01)i

According to International Patent Classification (IPC) or to both national classification and IPC

**B. FIELDS SEARCHED**

Minimum documentation searched (classification system followed by classification symbols)

F24F, F25B

Documentation searched other than minimum documentation to the extent that such documents are included in the fields searched

Electronic data base consulted during the international search (name of data base and, where practicable, search terms used)

CNABS, CNKI, DWPI, SIPOABS, EPODOC: 空调, 控制, 压缩机, 频率, 温度, 盘管, 修正, air w conditioner, control, compressor, frequency, temperature, coil, trim

**C. DOCUMENTS CONSIDERED TO BE RELEVANT**

| Category* | Citation of document, with indication, where appropriate, of the relevant passages | Relevant to claim No. |
|---|---|---|
| PX | CN 113251639 A (QINGDAO HAIER AIR CONDITIONER CO., LTD. et al.) 13 August 2021 (2021-08-13) <br> claims 1-10 | 1-10 |
| A | CN 111706967 A (QINGDAO HAIER AIR CONDITIONER CO., LTD. et al.) 25 September 2020 (2020-09-25) <br> description, paragraphs [0023]-[0082], and figures 1-4 | 1-10 |
| A | CN 108954713 A (GUANDONG MIDEA HVAC EQUIPMENT CO., LTD. et al.) 07 December 2018 (2018-12-07) <br> entire document | 1-10 |
| A | CN 101968249 A (NINGBO AUX ELECTRIC CO., LTD.) 09 February 2011 (2011-02-09) <br> entire document | 1-10 |
| A | CN 112050424 A (QINGDAO HAIER AIR CONDITIONER CO., LTD. et al.) 08 December 2020 (2020-12-08) <br> entire document | 1-10 |
| A | CN 110243063 A (NINGBO AUX ELECTRIC CO., LTD.) 17 September 2019 (2019-09-17) <br> entire document | 1-10 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 May 2022** | **19 May 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2022/077570** |

**C.** **DOCUMENTS CONSIDERED TO BE RELEVANT**

| Category* | Citation of document, with indication, where appropriate, of the relevant passages | Relevant to claim No. |
|---|---|---|
| A | CN 111964234 A (QINGDAO HAIER AIR CONDITIONER CO., LTD. et al.) 20 November 2020 (2020-11-20) <br> entire document | 1-10 |
| A | JP 2014190600 A (PANASONIC CORP.) 06 October 2014 (2014-10-06) <br> entire document | 1-10 |
| A | JP 2015113993 A (SHARP K. K.) 22 June 2015 (2015-06-22) <br> entire document | 1-10 |

Form PCT/ISA/210 (second sheet) (January 2015)

**INTERNATIONAL SEARCH REPORT**
Information on patent family members

International application No.

**PCT/CN2022/077570**

| Patent document cited in search report | | Publication date (day/month/year) | Patent family member(s) | Publication date (day/month/year) |
|---|---|---|---|---|
| CN 113251639 A | | 13 August 2021 | None | |
| CN 111706967 A | | 25 September 2020 | None | |
| CN 108954713 A | | 07 December 2018 | None | |
| CN 101968249 A | | 09 February 2011 | None | |
| CN 112050424 A | | 08 December 2020 | None | |
| CN 110243063 A | | 17 September 2019 | None | |
| CN 111964234 A | | 20 November 2020 | None | |
| JP 2014190600 A | | 06 October 2014 | None | |
| JP 2015113993 A | | 22 June 2015 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110436958